# FASCICULE DE BREVET EUROPEEN

(11) **EP 0 613 594 B1**
(45) Date de publication et mention de la délivrance du brevet: **28.05.1997**
(21) Numéro de dépôt: 93920918.5
(22) Date de dépôt: 22.09.1993
(51) Int. Cl.: H02K 21/00, H01F 7/14, H02K 7/09

(54) **Moteur-couple allongé et dispositif de commande en debattement angulaire le comportant**
Länglicher Drehmomentmotor und denselben aufweisende steuervorrichtung der winkelabweichung
Elongate torque motor and angular displacement control device incorporating it

(30) Priorité: 22.09.1992 FR 9211262
(43) Date de publication de la demande: 07.09.1994
(60) Demande divisionnaire: 94117990.5
(73) Titulaire: AEROSPATIALE Société Nationale Industrielle, 75781 Paris Cédex 16 (FR)
(72) Inventeur: BERNUS, Christophe, F-75018 Paris (FR); JAMAIN, Patrice, F-78580 Maule (FR); ROLAND, Jean-Pierre, F-95510 Vienne-en-Arthie (FR)
(74) Mandataire: Rinuy, Santarelli
(86) Numéro de dépôt international: FR9300922
(87) Numéro de publication internationale: WO9407299

(56) Documents cités:
- DE-A- 2 952 786
- FR-A- 2 249 474
- FR-A- 2 272 515

## Description

L'invention concerne un moteur couple sans commutation à débattement angulaire inférieur à 180°, ainsi qu'une application de ce moteur à la commande en débattement angulaire d'un arbre, portant par exemple un miroir de balayage (voire un support d'antenne, un filtre, une lentille, etc...), de préférence mais non exclusivement dans le domaine spatial.

On connaît déjà de nombreuses variétés de moteurs-couple, c'est-à-dire de moteurs dont le fonctionnement est fondé sur l'obtention d'un couple, grâce à la circulation d'un courant électrique d'intensité appropriée dans des fils, en pratique des portions de bobinage, placés dans un champ magnétique permanent. Mais les moteurs-couple connus ont généralement un encombrement important, transversalement ou parallèlement à l'axe de rotation, et/ou une inertie importante pour le rotor (c'est-à-dire la partie tournante du moteur) surtout lorsque c'est ce dernier qui porte les éléments générant le champ magnétique permanent (des aimants permanents en pratique).

A titre d'exemple, le document DE-A-2.952.786 propose un moteur électromagnétique pour le réglage en position d'un clapet d'étranglement ; dans l'une de ses formes de réalisation, le moteur comporte un rotor formé d'un barreau central globalement cylindrique comportant un aimant permanent allongé à aimantation radiale entre deux portions, ce rotor étant entouré par deux bobines à brins longitudinaux, fixées à un tube statorique en fer dans l'entrefer entre le barreau central et ce tube. Ce moteur est massif et le rotor a une inertie et un encombrement radial importants. La partie radialement externe du moteur étant statorique, des éléments complémentaires devant agir sur l'équipage tournant tels que paliers sont disposés axialement à l'écart du moteur, d'où un important encombrement axial global.

Il est rappelé ici que l'on appelle induit la partie du moteur portant les fils parcourus par le courant, et inducteur la partie complémentaire du moteur portant les éléments générant le champ magnétique permanent.

L'invention a pour objet un moteur couple sans commutation qui combine une faible inertie en rotation, un faible encombrement (notamment radial), un grand débattement angulaire (quoique inférieur à 180°), une constance du couple (sans ondulation) sur la quasi-totalité du débattement (pour une intensité donnée), une grande précision, une absence d'effort magnétique divergent (ce qui permet une combinaison aisée avec un montage sur palier du rotor), tout en étant facile et simple à fabriquer (d'où un faible coût et une grande fiabilité), et se prêtant à une implantation compacte d'éléments complémentaires tels que paliers ou dispositifs de verrouillage.

L'invention propose à cet effet un moteur-couple comportant un inducteur lié à un arbre mobile en rotation à l'intérieur d'un débattement angulaire donné autour d'un axe donné par rapport à une partie statorique comportant un induit, dans lequel :
- l'inducteur comporte un barreau central allongé selon ledit axe comportant deux portions d'un même cylindre diamétralement opposées et d'axes confondus avec l'axe donné, d'amplitudes angulaires sensiblement égales inférieures à 180°, et séparées par deux méplats longitudinaux globalement parallèles, ainsi qu'un barreau central à aimantation permanente disposé suivant l'axe donné et de sens d'aimantation orienté sensiblement parallèlement aux méplats, et
- l'induit comporte au moins un bobinage ayant une entrée et une sortie et comportant des brins longitudinaux parallèles disjoints raccordés par des brins disposés transversalement à l'axe donné, ces brins longitudinaux étant répartis en deux faisceaux diamétralement opposés, ce moteur étant caractérisé en ce que l'inducteur comporte en outre une portion tubulaire ferromagnétique s'étendant circonférentiellement tout autour de ce barreau central radialement à distance de celui-ci, et en ce que l'induit est un élément tubulaire interposé radialement entre le barreau central et la portion tubulaire ferromagnétique et tous les brins d'un faisceau étant, lorsqu'un courant est appliqué entre l'entrée et la sortie du bobinage, parcourus par des courants de même sens, chaque faisceau étant en regard de l'une, respective, des portions de cylindre, et ledit débattement angulaire donné étant inférieur à la différence entre les amplitudes angulaires des portions de cylindre et des faisceaux.

Selon des dispositions préférées de l'invention, éventuellement combinées :
- le barreau central à aimantation permanente s'étend d'un méplat à l'autre,
- le barreau central s'étend axialement sur une distance inférieure à la longueur des brins longitudinaux et les brins transversaux sont disposés axialement à l'écart de part et d'autre de ce barreau central,
- les méplats sont plans et parallèles.
- l'amplitude angulaire de chaque portion de cylindre est comprise entre 90° et 170°,
- l'amplitude angulaire de chaque faisceau est inférieure à 30°,
- l'amplitude angulaire de chaque portion de cylindre est de 150° environ, l'amplitude angulaire de chaque faisceau est d'environ 30°, et l'amplitude de débattement est d'environ 120°,
- l'induit tubulaire est formé de plusieurs bobinages montés en série ménagés en couches radialement superposées mais électriquement isolées les unes des autres, l'entrée de chaque bobinage étant toutefois connectée à la sortie du bobinage précédent, et les faisceaux des bobinages, dont les brins longitudinaux sont parcourus à tout instant par des courants de même sens axial, étant superposés radialement,
- les faisceaux de l'induit tubulaire sont formés de fils conducteurs voisins répartis dans l'épaisseur de cet induit,
- l'induit tubulaire est formé de 2 à 10 couches de bobinages formés de pistes de circuits imprimés.

L'invention a également pour objet un dispositif de commande en débattement angulaire d'un corps tournant, par exemple un miroir de balayage éventuellement embarqué sur un satellite d'observation, comportant un moteur-couple ayant les propriétés précitées, qui soit à faible niveau de vibrations en service et sans frottement, qui soit précis, stable et fiable tout en autorisant avantageusement un faible basculement de l'axe de rotation (typiquement de l'ordre du milliradian), le tout dans un environnement éventuellement spatial.

L'invention propose à cet effet un dispositif de commande en débattement angulaire d'un équipage mobile, comportant un stator, un arbre lié à cet équipage mobile et s'étendant selon un axe donné et un moteur du type précité pour entraîner cet arbre en mouvement par rapport au stator, cet arbre étant monté dans au moins un palier magnétique.

Selon d'autres dispositions préférées de l'invention, éventuellement combinées :
- chaque palier magnétique est à deux axes transversaux asservis,
- chaque palier magnétique comporte une couronne polaire ferromagnétique portée par l'arbre et, autour de cette couronne, portées par le stator, une couronne à aimantation permanente axiale, deux paires de noyaux axiaux entourés de bobines, et deux plaques polaires enserrant cette couronne à aimantation permanente et ces paires de noyaux,
- il y a deux paliers magnétiques ayant chacun deux axes transversaux asservis,
- la portion tubulaire ferromagnétique du moteur comporte deux couronnes polaires ferromagnétiques faisant partie de deux paliers magnétiques,
- ce dispositif de commande en débattement angulaire comporte un dispositif de commande en basculement comportant au moins l'une des paires de bobines de l'un des paliers, et un bloc de commande adapté à faire varier la consigne de positionnement de l'arbre transversalement à l'axe de rotation pour au moins cette paire de bobines,
- ce dispositif de commande en débattement angulaire comporte un dispositif de verrouillage adapté à maintenir radialement l'arbre dans une configuration donnée,
- ce dispositif de commande en débattement angulaire comporte deux paliers magnétiques et ce dispositif de verrouillage est disposé axialement entre ces deux paliers magnétiques,
- ce dispositif de verrouillage comporte une pluralité de pinces munies de patins de serrage articulées sur une partie statorique autour de pions axiaux situés à distance de l'axe, mobiles sous l'action d'une pièce de manoeuvre entre une configuration de déverrouillage dans laquelle les patins sont à une distance maximale de l'axe et une configuration de verrouillage dans laquelle ces patins sont à une distance minimale de l'axe propre à induire un serrage radial de l'arbre,
- les patins de serrage sont en regard radialement de la portion tubulaire ferromagnétique du moteur,
- l'arbre comporte des butées axiales adaptées à venir axialement en regard des patins de serrage dans la configuration de verrouillage, grâce à quoi cet arbre est maintenu axialement dans ladite configuration de verrouillage,
- la pièce de manoeuvre est une bague annulaire centrée sur l'axe ayant un débattement angulaire donné, comportant autant de tétons axiaux qu'il y a de pinces, chaque pince comportant une lumière circonférentielle traversée par l'un des tétons, les bords radialement interne et externe de cette lumière formant des rampes pour les tétons, cette lumière comportant une première extrémité circonférentielle située à une distance minimale de l'axe de rotation et une seconde extrémité circonférentielle située à une distance maximale de l'axe de rotation, grâce à quoi, lorsque les tétons de la bague sont dans les premières extrémités circonférentielles des lumières, les pinces sont dans leurs configurations de déverrouillage et lorsque les tétons de la bague sont dans les secondes extrémités circonférentielles des lumières, les pinces sont dans leurs configurations de verrouillage,
- ces tétons sont chacun munis de roulements adaptés à rouler sur les bords radialement interne ou externe des lumières circonférentielles,
- la bague est commandée en débattement angulaire par un second moteur comportant un induit solidaire de la bague et un inducteur lié à la partie statorique du dispositif de commande en débattement angulaire, cet induit ayant globalement la forme d'un disque plat et l'inducteur étant formé d'au moins une paire d'armatures magnétiques circonférentiellement disjointes coiffant sans contact la périphérie radialement externe de ce disque sur des secteurs angulaires disjoints et présentant chacune deux rebords formant des saillies axiales axialement en regard au travers du disque, au moins une portion de couronne à aimantation permanente coplanaire à l'axe étant ménagée dans chaque armature en sorte de générer un flux magnétique se refermant axialement entre les rebords au travers de l'induit, cet induit comportant au moins un bobinage plan, avec une entrée et une sortie, formé de brins en arc de cercle concentriques et centrés sur l'axe et de brins radiaux raccordant les brins en arc de cercle en sorte de former au moins un ensemble de spires en forme de banane emboîtées les unes dans les autres mais raccordées en série, les brins radiaux de chaque bobinage étant regroupés en au moins une paire de faisceaux formés de brins adjacents mais disjoints tels que, lorsqu'un courant est appliqué entre l'entrée et la sortie du bobinage, tous les brins radiaux d'un même faisceau soient parcourus par des courants de même sens radial, chacun des faisceaux étant disposé axialement entre les rebords d'une armature respective, le sens axial du flux traversant l'induit entre les rebords de chaque armature étant choisi en sorte que, lorsqu'un courant est appliqué entre l'entrée et la sortie du bobinage, l'interaction entre les courants circulant dans les brins des faisceaux avec les flux magnétiques axiaux génère sur l'induit des couples de même sens, l'amplitude angulaire du débattement étant définie par la différence entre les amplitudes angulaires des paires de rebords et des faisceaux de brins radiaux,
- les patins de serrage sont sollicités radialement vers l'axe par des éléments élastiques agissant sur la bague,
- la bague de manoeuvre est reliée à une portion statorique par une pluralité d'éléments élastiques globalement radiaux, travaillant en compression, mobiles dans un plan transversal à l'axe de part et d'autre d'une configuration instable dans laquelle ils sont orientés radialement, entre deux configurations extrêmes stables pour lesquelles les pinces sont en leurs configurations de verrouillage ou de déverrouillage, respectivement.

On appréciera que, selon un aspect de l'invention original en soi, on tire profit des entrefers radiaux du palier magnétique dans lequel est monté l'arbre pour autoriser un basculement de cet arbre, minime, certes, mais en pratique suffisant, par exemple pour compenser l'avance sur son orbite d'un satellite sur lequel est embarqué un dispositif de commande en débattement angulaire portant un miroir de balayage d'axe parallèle à l'orbite. Ce basculement est avantageusement commandé par modification de la consigne de position de l'arbre dans son (ou ses) palier(s) magnétique(s), lequel est pour ce faire avantageusement choisi en sorte d'avoir au moins un axe radial actif (transversal à l'axe autour duquel on cherche à avoir un basculement) voire par des actions axiales de sens opposés appliquées en des zones diamétralement opposées de la partie rotorique de ce palier.

Des objets, caractéristiques et avantages de l'invention ressortent de la description qui suit, donnée à titre d'exemple non limitatif, en regard des dessins annexés sur lesquels :
- la figure 1 est une vue schématique en coupe axiale d'un dispositif de commande en débattement angulaire ;
- la figure 2 est une vue en coupe axiale du palier magnétique de la figure 1 ;
- la figure 3 est une vue en coupe transversale du moteur de la figure 1 ;
- la figure 4 est une vue en perspective de la partie statorique (ici l'induit) de ce moteur ;
- la figure 5 est une vue partielle transversale du dispositif de verrouillage, selon la ligne V-V de la figure 1 ;
- la figure 6 est une autre vue partielle de ce dispositif de verrouillage, selon la ligne VI-VI de la figure 1 ;
- la figure 7 est une vue agrandie du moteur du dispositif de verrouillage, pris isolément ;
- la figure 8 est une vue en coupe de la partie statorique du moteur de la figure 7, selon la ligne VIII-VIII de cette figure 7 ;
- la figure 9 est une vue en coupe transversale du disque mobile de ce moteur (ici son induit) selon la ligne IX-IX de la figure 7 ; et
- la figure 10 est un schéma de principe de l'électronique de commande du dispositif de la figure 1.

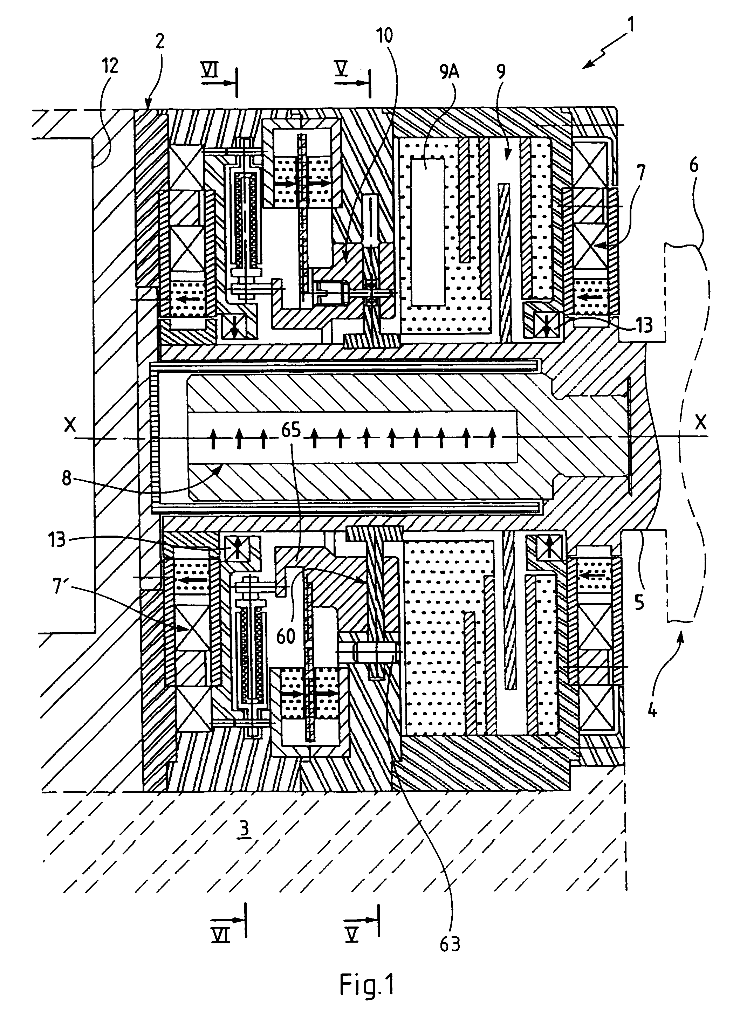

La figure 1 représente, sous la référence générale 1, un dispositif de commande en débattement angulaire comportant une partie statorique 2, destinée à être fixée à un support 3, par exemple un satellite suivant une orbite terrestre, et une partie rotorique 4, montée rotative vis à vis de la partie statorique 2 autour d'un axe X-X, par exemple parallèle à l'orbite précitée, comportant un arbre 5 et une portion utile 6 telle qu'un miroir de balayage.

Ce dispositif 1 est formé principalement de paliers 7 et 7', d'un moteur 8, d'un éventuel résolveur angulaire 9, d'un dispositif de verrouillage 10 (avantageusement disposé axialement entre les paliers, ce qui améliore le maintien de l'arbre), d'un dispositif de commande en basculement, et d'un bloc électronique 12 contrôlant le fonctionnement des divers composants du dispositif 1. La référence 13 désigne des capteurs de position radiale servant au fonctionnement des paliers 7 et 7'.

Les paliers 7 et 7' sont du type magnétique actif, de manière à s'affranchir de tout frottement et de tous les inconvénients habituellement associés au frottement (vibrations, phénomène d'hystérésis en cas d'inversion du sens de mouvement, etc...) et qui seraient préjudiciables à une bonne précision angulaire. Il sont ici identiques l'un à l'autre.

Le dispositif de commande en basculement, selon un aspect original en soi, profite du débattement axial ou radial qui existe dans un palier magnétique entre rotor et stator pour induire un basculement soit par déplacement radial de la partie rotorique du palier, soit par actions axiales de sens contraires en deux zones diamétralement opposées de cette partie rotorique.

Le moteur 8 est à débattement angulaire limité pouvant ici approcher (sans l'atteindre) la valeur de 180° ; il a une conformation très allongée sur l'axe ce qui lui confère un encombrement radial bien plus faible que les moteurs connus, combiné à une très faible inertie en rotation autour de l'axe X-X.

Sa commande en asservissement fait ici intervenir le résolveur angulaire 9 qui sert à détecter la position angulaire de la partie rotorique 4 par rapport à la partie statorique. Ce résolveur est de tout type connu approprié, par exemple magnétique ou optique.

Le dispositif de verrouillage 10 a ceci d'original en soi qu'il s'agit d'un système mécanique réversible du type pince de serrage auto-centrée, ce qui permet de s'affranchir des inconvénients des solutions pyrotechniques (notamment pollution, caractère mono-coup, reproductibilité de fabrication insuffisamment contrôlée, sécurité insuffisante en cas de présence humaine) et permet au sol des essais complets avec plusieurs verrouillages et déverrouillages.

Les divers étages précités sont détaillés ci-dessous.

Diverses valeurs numériques seront données (pour préciser l'exemple considéré ici), correspondant aux spécifications suivantes pour un système de balayage optique embarqué sur satellite :
- précision de visée : 0,25*10⁻³ rad mécaniques
- stabilité sur 150 ms : 0,085*10⁻³ rad mécaniques
- débattement maximum : 113,925°
- couple perturbateur induit par réaction : 6*10⁻²N.m
- temps de transition entre deux positions de visée décalées de 1.65° mécanique : 66 ms
- masse mécanique : < 4 kg
- amplitude de basculement : 1,38*10⁻³ rad
- tension d'alimentation : 22-37 V
- durée de vie : 4 ans (stockage) + 5 ans (service)

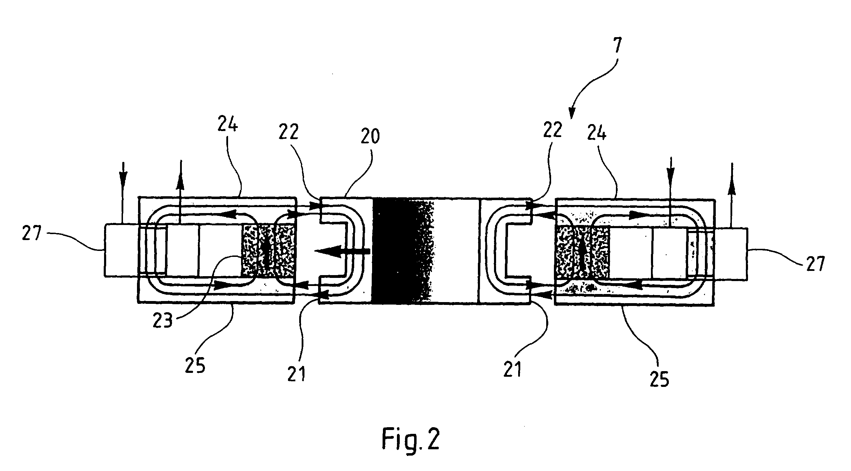

Ainsi tout d'abord la structure et le fonctionnement du palier magnétique 7 ou 7' sont représentés à la figure 2.

Le palier magnétique 7 (ou 7') est d'un type classique, connu en soi d'après le brevet français 87-03489 ou US-4.918.345 (VAILLANT DE GUELIS et al.)

Ce palier 7 est ici du type à deux axes transversaux asservis (on parle parfois de palier à contrôle radial actif et à contrôle axial passif). Cette solution est notamment intéressante pour des raisons de faible encombrement axial. En l'absence de cette contrainte on peut préférer un palier à contrôle radial passif et à contrôle axial actif ce qui présente des avantages de simplicité du point de vue électronique.

Il est rappelé ici qu'un système de suspension magnétique ne peut jamais être complètement passif car on peut démontrer qu'il y a toujours au moins un degré de liberté suivant lequel la partie suspendue (rotor) est dans un état d'équilibre instable (c'est-à-dire que la suspension a suivant ce degré de liberté une raideur négative), ce qui impose la mise en oeuvre pour ce degré de liberté d'une boucle active à actionneurs du type bobines.

Comme cela sera mentionné ci-dessous, le fait que le palier 7 ou 7' soit à contrôle radial actif a pour avantage de permettre, en modifiant les consignes d'asservissement, de commander le basculement de l'axe X-X de l'arbre.

Ainsi que cela ressort de la figure 2, ce palier comporte, du côté partie rotorique, une simple couronne polaire ferromagnétique 20 munie de nervures annulaires 21 et 22 tandis que ce palier comporte, du côté statorique, une couronne 23 d'aimants permanents à aimantation axiale, pris axialement en sandwich entre deux pièces polaires plates annulaires 24 et 25 définissant des entrefers avec les nervures 21 et 22 et enserrant par ailleurs deux paires (une seule est visible) de noyaux axiaux 26 diamétralement opposés, ces paires étant décalées de 90° et ces noyaux étant entourés de bobines 27. Dans les pièces polaires sont avantageusement prévues des fentes radiales (non visibles) alternant circonférentiellement avec les ensembles noyau/bobine et visant à empêcher (de façon connue) les fuites magnétiques d'une bobine vers l'autre. A chaque axe d'asservissement radial (il y en a ici deux) sont associées deux bobines diamétralement opposées, connectées électriquement l'une à l'autre pour former un circuit indépendant de celui de l'autre axe.

Dans ce type de palier, le rotor est rappelé passivement s'il se déplace axialement ou s'il bascule suivant un axe perpendiculaire à l'axe X-X.

On appréciera que les bobines et les aimants mélangent leurs flux. Les aimants permanents de la couronne 20 produisent un flux principal statique tandis que les bobines, lorsqu'elles sont excitées par un courant de sens donné, génèrent un flux additionnel qui sert à moduler le flux permanent ou statique existant dans les entrefers et donc à augmenter d'un côté (à la figure 2, à gauche) et diminuer de l'autre côté (à la figure 2, à droite) la force radiale appliquée à la partie suspendue et donc appliquer à cette dernière une force radiale de sens et d'amplitude propre à ramener cette partie suspendue en sa position d'équilibre. Il suffit d'inverser le courant dans les bobines pour générer une force contraire. Bien sûr les bobines associées à un même axe sont montées et alimentées en sorte d'appliquer toujours des forces de même sens. Un avantage de cette disposition est d'offrir une caractéristique effort/courant qui est quasi-linéaire : cela permet l'emploi, dans le bloc électronique, de simples amplificateurs linéaires.

On appréciera que ce palier permet une très faible inertie en rotation puisque l'essentiel des éléments constitutifs des paliers est porté par leur partie statorique.

Outre l'absence de frottement (augmentant la durée de vie) et de "bruit de frottement" (améliorant la précision angulaire), ce palier à aimants permanents présente les avantages suivants :
- encombrement très réduit,
- consommation permanente quasi nulle en l'absence de perturbation vibratoire,
- raideurs radiale, axiale et en basculement largement suffisantes pour l'application envisagée.

Un exemple de dimensionnement du palier 7 (ou 7') est le suivant :
- diamètre moyen du rotor du palier : 47 mm
- entrefers : 0,60 mm
- inertie de rotation des deux rotors : 7,1*10⁶ kg.m²
- masse d'aimants : 70 g
- raideurs (par palier) :
   axiale : 20 N/mm
   radiale : 100 N/mm
- jeu radial de butée (au rayon) : 0,20 mm
- actionneur :
   . nombre de spires : 170
   . diamètre de fil : 0,6 mm
   . intensité de décollage sous 1g et pour 0,2 mm (pire cas, lors des essais sol) de décalage initial : 2 A
   . tension mini de décollage : 5 V

Il est à noter que lors d'essais au sol, si l'ensemble est disposé suivant un axe vertical, la boucle d'asservissement radial ne nécessite pas plus de puissance électrique qu'en vol : le poids de l'ensemble suspendu n'influe pas sur la position radiale du rotor. Cependant les tension et courant de décollage indiqués ci-dessus ont été dimensionnés de manière à pouvoir faire fonctionner le palier au sol quelle que soit sa position ; toutefois seule la position verticale avec compensation du poids par un dispositif axial (contrepoids sur poulie) est représentative du fonctionnement en apesanteur.

En variante non représentée, les paliers magnétiques peuvent être du type décrit notamment dans le brevet US-4.470.644 (WEISSER) comportant une couronne d'aimants solidaire du rotor.

L'asservissement est réalisé à partir des informations données par les capteurs 13 de position radiale du rotor (deux capteurs par axe asservi). Les paliers magnétiques 7 et 7' peuvent utiliser indifféremment des capteurs de vitesse ou bien des capteurs de déplacement (il est à la portée de l'homme de métier d'adapter le bloc électronique en conséquence).

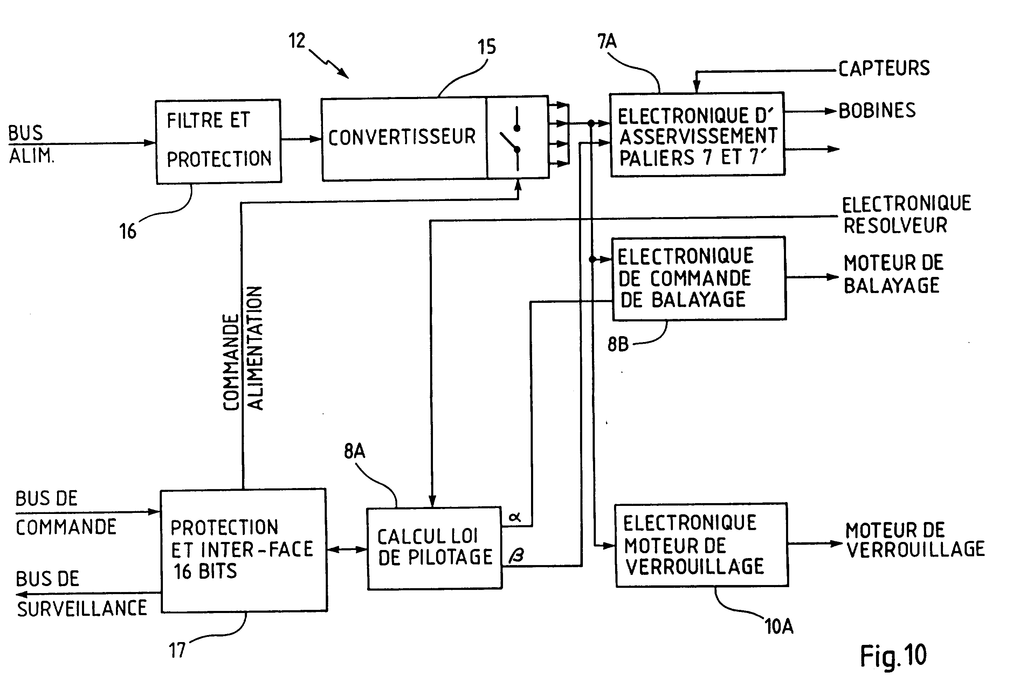

La stabilité du rotor en lévitation magnétique est assurée par deux chaines d'asservissement identiques pilotant chacune un axe, représentées conjointement sous la référence 7A à la figure 10. Chaque chaine comporte trois fonctions :
- un étage de traitement du signal d'entrée,
- un étage de correction,
- un étage d'amplification.

Seules les fonctions génération de la fréquence porteuse 50 kHz des capteurs de position sont communes.

Cette électronique reçoit en entrée un signal image de la position du rotor ; celui-ci est traité via un correcteur qui assure la fonction de transfert nécessaire à la stabilité de l'asservissement. Un amplificateur de puissance assure l'interface avec le palier.

Le décollage radial du rotor à partir d'une position en butée s'effectue automatiquement sans adjonction d'une fonction supplémentaire. Seule la présence de la tension d'asservissement permet le décollage du rotor par rapport à sa position en butée.

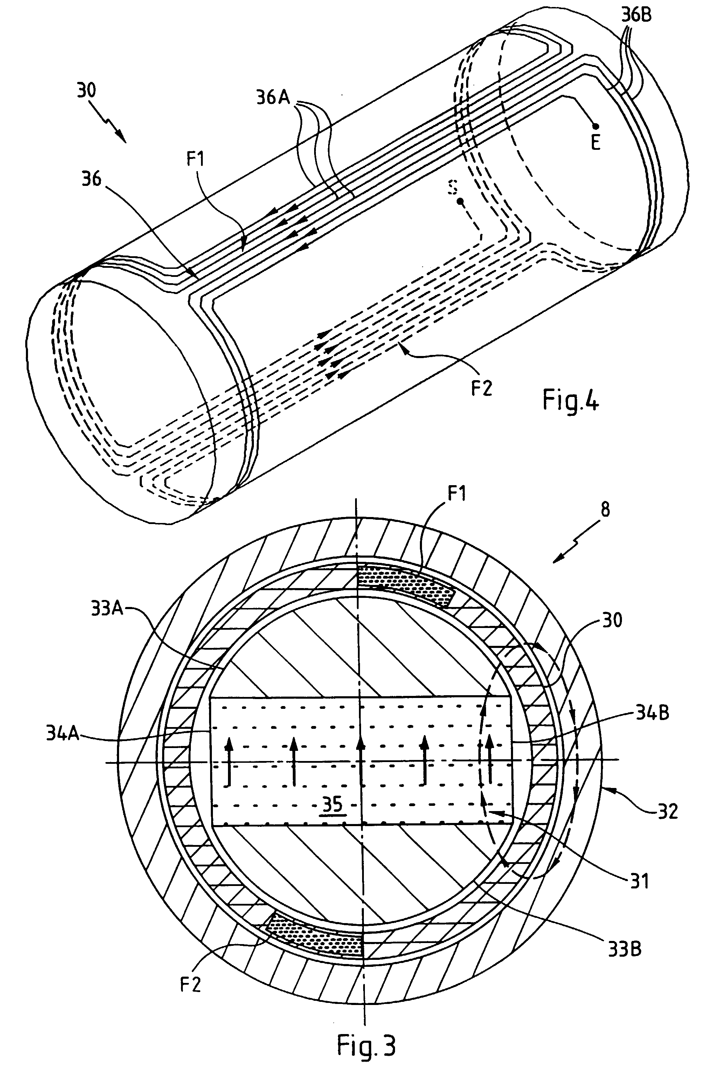

Tel que représenté aux figures 3 et 4, le moteur 8 servant à commander le déplacement angulaire de la partie rotorique 4 est un moteur couple, à débattement limité à environ 120°, qui est entièrement situé à l'intérieur de l'encombrement radial de l'arbre 5.

Plus précisément, ce moteur couple 8 comporte, du côté stator, un induit tubulaire 30 et, du côté rotor, un inducteur composé d'un barreau central 31 s'étendant axialement à l'intérieur de l'induit tubulaire et d'une portion tubulaire ferromagnétique 32 s'étendant tout autour de l'induit tubulaire 30.

On appréciera à la figure 1 que c'est également sur cette portion tubulaire ferromagnétique 32 que sont ménagées les nervures ferromagnétiques des paliers magnétiques 7 et 7'.

Entre l'induit tubulaire 30 et la portion rotorique tubulaire 32 est ménagé un entrefer annulaire de dimension radiale normalement constante ; en effet la surface extérieure de l'induit et la surface intérieure de la portion tubulaire sont cylindriques. Par contre, la surface extérieure du barreau central 31 est formée de deux portions d'un même cylindre 33A et 33B d'amplitudes angulaires sensiblement égales inférieures à 180° (par exemple 150°) diamétralement opposées et séparées par deux méplats longitudinaux 34A et 34B (ici plans et parallèles) grâce à quoi les deux portions cylindriques 33A et 33B définissent avec l'induit deux entrefers de dimension radiale très inférieure à la distance radiale moyenne entre les méplats et cet inducteur. En variante non représentée, ces méplats sont convexes ou plutôt concaves.

Dans ce barreau central 31 est disposé un barreau à aimantation permanente 35 dont le sens d'aimantation est orienté transversalement à l'axe et parallèlement aux méplats en sorte de générer un flux magnétique depuis l'une des portions cylindriques vers l'autre. Ce flux quitte l'une des portions cylindriques et traverse radialement l'induit jusqu'à la portion tubulaire ferromagnétique puis circule circonférentiellement dans celle-ci pour repénétrer dans le barreau central par l'autre portion cylindrique. Une ligne de flux est représentée à titre d'exemple.

Le barreau à aimantation permanente s'étend avantageusement sur toute la largeur du barreau central entre les méplats de sorte que le barreau central se compose d'un barreau aimanté séparant deux pièces polaires.

Ainsi que cela est représenté à la figure 4, l'induit comporte au moins un bobinage 36.

Chaque bobinage 36 comporte des brins longitudinaux parallèles disjoints 36A (leur écartement a été exagéré à la figure 4 pour des raisons de clarté) raccordés par des brins 36B disposés transversalement à l'axe, ici en arcs de cercle tels que les brins soient tous en série entre une borne d'entrée E et une borne de sortie S. Les brins longitudinaux sont répartis en deux faisceaux F1 et F2 diamétralement opposés, d'amplitude angulaire inférieure à celle des portions cylindriques du barreau central, par exemple ici de l'ordre de 20°. Tous les brins d'un même faisceau sont, lorsqu'un courant est appliqué entre les bornes E et S, parcourus par des courants de même sens.

Ces faisceaux sont disposés sur l'induit en sorte d'être en regard des portions cylindriques du barreau central. De la sorte, dès qu'un courant est appliqué dans un sens ou dans l'autre entre les bornes E et S, l'interaction de ce courant circulant dans les brins longitudinaux avec les flux magnétiques traversant l'induit génère un couple sur le barreau. Le débattement angulaire de l'inducteur vaut ainsi au maximum sensiblement la différence entre les amptitudes angulaires des faisceaux de l'induit et des portions cylindriques du barreau central.

On appréciera que les courants circulant dans les brins transversaux n'induisent aucun couple.

De préférence ces brins transversaux sont disposés axialement à l'écart du barreau central à aimantation permanente. En d'autres termes, ce barreau central est avantageusement plus court que les brins longitudinaux (on évite ainsi l'apparition d'efforts coaxiaux).

On appréciera que, bien que les matériaux à aimantation permanente soient généralement de poids spécifique élevé, cela a selon l'invention une faible incidence sur l'inertie en rotation de l'équipage mobile puisque le barreau aimanté est disposé suivant l'axe de rotation.

Le bobinage 36 peut être réalisé par dépôt de pistes, selon la technologie des circuits imprimés, auquel cas l'induit peut comporter plusieurs bobinages 36 ménagés en des couches de circuit imprimé radialement superposées et isolées électriquement les unes des autres, l'entrée de chaque bobinage étant toutefois connectée à la sortie du précédent, de manière à ce que ces bobinages soient en série, et les faisceaux analogues des divers bobinages étant respectivement superposés radialement en sorte d'ajouter et non soustraire les couples générés par les faisceaux voisins.

Toutefois, ainsi que cela ressort de la figure 3, le bobinage peut être formé de fils tels que les brins des faisceaux soient des fils conducteurs répartis sur l'épaisseur de l'induit tubulaire.

La configuration du moteur 8 permet ainsi d'obtenir des couples importants avec des induits de faible inertie de rotation ; de plus elle présente l'avantage de fournir un couple constant (donc sans ondulation) pour une intensité donnée sur tout son débattement angulaire, soit environ ici 130° ce qui ne pourrait être obtenu de façon fiable avec un moteur synchrone ou un moteur à commutation entre plusieurs paires de pôles. Un autre avantage fondamental de ce moteur 8 est l'absence d'effort magnétique divergent (raideur négative), ce qui permet son utilisation couplée avec un palier magnétique sans problème supplémentaire de stabilité à résoudre.

A titre d'exemple, les caractéristiques principales de ce moteur sont :
- diamètre moyen du bobinage stator (induit) : 28,5 mm
- épaisseur du tube statorique : 2,2 mm
- induction dans l'entrefer : 0,3 T
- résistance du bobinage : 2,3 Ohms
- inertie du rotor (aimant + tube central) : 6,46*10⁻⁶ kg.m²
- couple maximum : 6*10⁻² N.m
- intensité pour le couple max. : 2 A
- puissance dissipée à Imax : 9 W

Deux technologies (connues en soi) de détection de position angulaire sont possibles pour obtenir la précision angulaire demandée :
- résolveur optique 9 (cas représenté ici) : composé d'un disque de verre gravé, et de plusieurs paires d'émetteur (diode optique) - récepteur (non représentées) décalés d'un quart de pas de gravure pour connaître le sens de rotation et améliorer la précision du résolveur. Un inconvénient possible de ce type de résolveur est le très petit jeu nécessaire entre le disque d'une part, et les émetteurs-récepteurs d'autre part (quelques dizaines de microns). Par contre l'électronique référence 9A à la figure 1 est assez simple. Ce type de décodeur fonctionne en relatif (incrémentation - décrémentation) et nécessite un repère pour la position zéro.
- résolveur magnétique à reluctance variable (cas non représenté) composé d'une partie tournante liée à l'arbre et avantageusement formée de deux couronnes dentées décalées à la fois axialement et radialement (de la moitié de l'écart angulaire entre les dents des couronnes - il y en a par exemple 32 de sorte que le décalage radial est 5,625° - pour connaître le sens de rotation) et d'une partie fixe composée elle aussi de deux couronnes dentées mais dont les dents sont entourées de bobinages. Une tension alternative sinusoïdale est injectée dans les bobines de chaque couronne de la partie fixe (toutes les bobines sont en série) et le courant de sortie retrace la reluctance du circuit magnétique ainsi formé : reluctance faible pour les dents en face les unes des autres, et forte lorsque les dents d'une couronne sont en face des creux de l'autre couronne. La forme des dents est étudiée pour avoir un signal de sortie sinusoïdal pour un pas polaire : une électronique de traitement appropriée (résolveur synchrodigital) permet ensuite de connaître précisément la position angulaire sur un pas polaire. Ce résolveur est donc à fonctionnement mixte : absolu sur chaque pas polaire, relatif (incrémental) d'un pas polaire à l'autre. Avec 32 dents sur chaque couronne et le résolveur synchrodigital on obtient la précision voulue. L'avantage de ce principe réside dans la possibilité d'avoir des entrefers relativement grands (0,25 - 0,3 mm) compatibles avec la souplesse du palier magnétique.

Le positionnement du miroir 6 à la valeur de consigne demandée est réalisé par un bloc d'asservissement schématisé en 8A à la figure 10, dont les entrées sont les informations du résolveur angulaire et la consigne de balayage, la sortie étant un signal de commande α.

La commande proprement dite du moteur de balayage (voir bloc 8B de la figure 12) se fait à l'aide d'un amplificateur de courant de linéarité et de distorsion de croisement compatibles avec les performances requises. Celui-ci reçoit en entrée la commande analogique α et délivre un courant de signe et d'amplitude proportionnel au couple nécessaire à l'asservissement du moteur balayage.

Son alimentation s'effectue si possible directement à partir de la tension non régulée d'un convertisseur 15 relié à un bus d'alimentation par un élément 16 de filtrage et de protection.

Pour assurer une commande en basculement de l'arbre, on peut prévoir de petites bobines disposées autour de noyaux disposés au moins approximativement axialement en regard d'une partie rotorique. Ces bobines étant disposées de part et d'autre axialement de cette partie rotorique, en des zones diamétralement opposées à l'axe autour duquel on veut pouvoir provoquer un basculement. La commande en basculement se fait alors par activation de deux telles bobines disposées de part et d'autre à la fois de cette partie rotorique et de l'axe de celle-ci, en sorte d'attirer ce rotor, en une zone dans un sens axial et dans une zone diamétralement opposée dans le sens axial opposé, ce qui provoque un couple transversal sur l'arbre. On profite ici de ce que le palier magnétique a une raideur positive en basculement.

Toutefois, de manière préférée, on profite ici de la présence de deux paliers magnétiques pour obtenir un basculement en déplaçant tout simplement la position de consigne de l'un au moins des deux paliers, voire les positions de consigne de l'arbre dans des sens radiaux opposés pour les deux paliers, ce qui induit un couple.

Ainsi par exemple, on dispose les paliers 7 et 7' en sorte que leurs axes transversaux asservis soient parallèles, et on agit sur les bobines des paliers agissant parallèlement à une même direction. En fait, un basculement est obtenu dès lors qu'on déplace la consigne pour une seule paire de bobines dans un seul palier.

Ce basculement est contrôlé par l'électronique d'asservissement, schématisée en 7A à la figure 10, pilotée à partir de la consigne de basculement β.

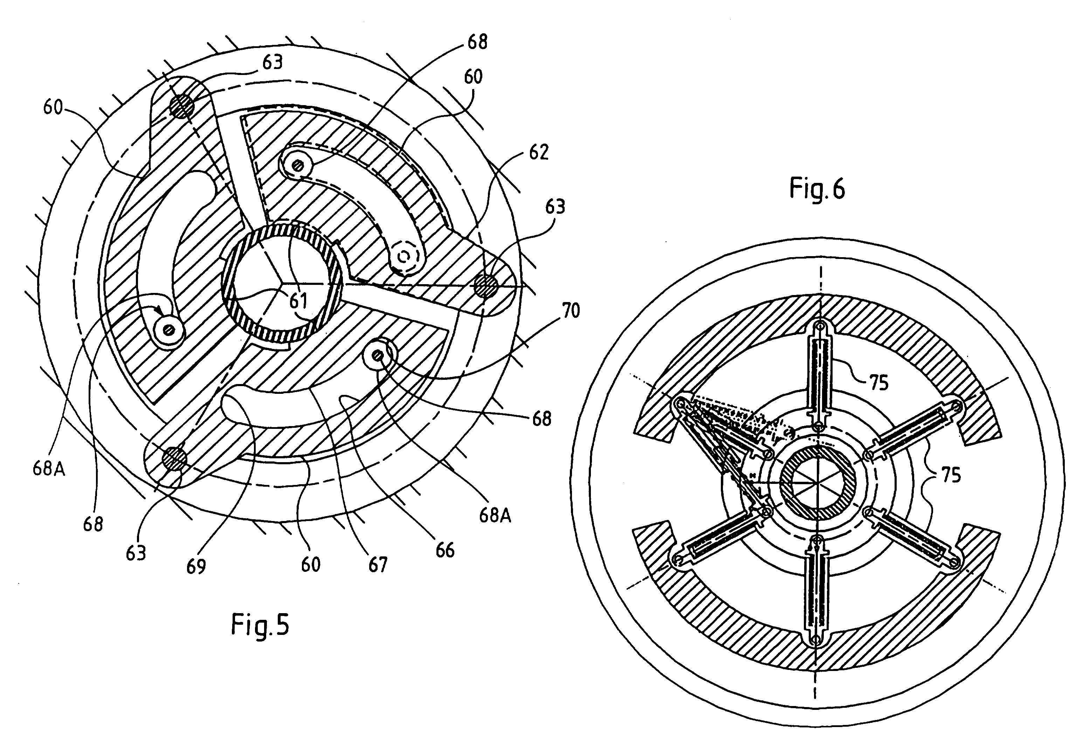

Le dispositif de verrouillage 10 est représenté aux figures 5 à 9.

Ce dispositif 11 comporte trois pinces 60 munies chacune d'un patin de serrage 61 adapté, avec les patins 61 des autres pinces, à enserrer l'arbre 5. De manière préférée, ainsi que cela ressort de la figure 1, les patins rentrent dans une gorge circonférentielle de l'arbre dont les flancs permettent ainsi un maintien axial de l'arbre dans un sens au moins (plus généralement il peut suffire de quelques portées axiales pour les tranches des patins).

Ces pinces 60 sont, en des zones 62 décalées aussi bien radialement que circonférentiellement décalées vis à vis des patins 61, articulées sur la partie statorique de l'ensemble du dispositif, à l'aide de pions axiaux 63.

Ces pinces 60 sont logées dans une fente transversale d'une bague 65 (voir aussi la figure 1) adaptée à tourner autour de l'axe X-X avec un débattement limité, par exemple 60°.

Chacune des pinces comporte une lumière 66 dont les bords radialement interne 67 et externe 67', qui ne sont pas centrés sur l'axe X-X, forment des rampes pour un téton axial 68 solidaire de la bague et traversant cette lumière. De manière préférée, ces tétons 68 sont munis de roulements 68A, ce qui minimise les frottements avec ces rampes. Chaque lumière 66 comporte une première extrémité circonférentielle 69 proche de l'articulation 63 où le bord 67 est à distance minimale de l'axe de son patin 61 et une seconde extrémité circonférentielle 70 éloignée de l'articulation 63, où le bord est à distance maximale de l'axe du patin.

Les trois tétons axiaux 68 sont positionnés dans la bague 65 au travers de sa fente en sorte d'être simultanément, soit aux premières extrémités circonférentielles 69 (configuration de déverrouillage), soit aux secondes extrémités circonférentielles 70 (configuration de verrouillage).

Cette bague 65 est rappelée en rotation de manière bistable passive au moyen d'éléments élastiques 75 (à base de ressorts) - voir ci-dessous - vers l'une ou l'autre des configurations de verrouillage ou de déverrouillage, garantissant ainsi, d'une part en configuration de déverrouillage, le maintien de cette configuration et, d'autre part, en configuration de verrouillage non seulement le maintien en configuration mais aussi l'effort appliqué par les patins sur l'arbre : en pratique, les lumières 66 sont dimensionnées en sorte que les patins de serrage viennent s'appliquer sur l'arbre avant que les tétons viennent en butée circonférentielle contre les secondes extrémités circonférentielles 70.

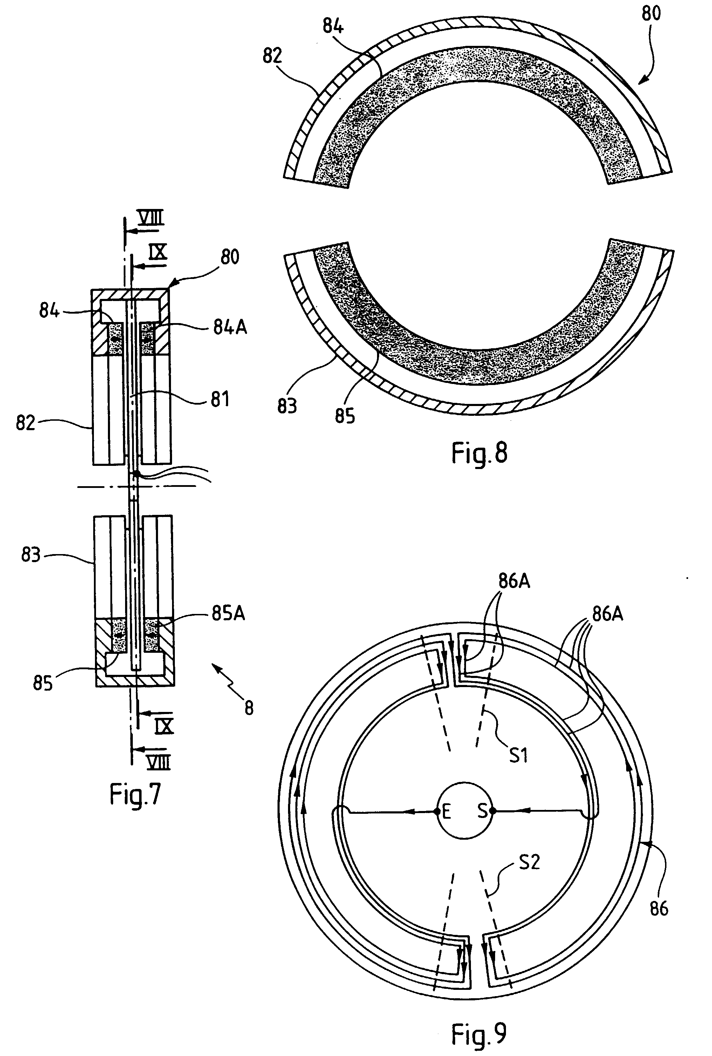

La bague 65 est manoeuvrée entre ses deux configurations, à l'encontre des éléments de rappel bistable passif précités, par un moteur 71 qui est avantageusement du type représenté aux figures 7 à 9.

Ce moteur 71 servant à manoeuvrer la bague 65 est un moteur couple à débattement limité à environ 120°, comportant une partie statorique ou inducteur 80 comportant une paire de pôles et une partie rotorique, aussi appelée induit 81, constituée d'un disque portant un ou plusieurs bobinages plans, de préférence réalisés chacun selon la technologie des circuits imprimés.

Plus précisément, ainsi que cela ressort des figures 4 et 5, l'inducteur 80 comporte une paire d'armatures magnétiques 82 et 83 disjointes, coiffant sans contact la périphérie de l'induit sur des secteurs angulaires inférieurs à 180° (par exemple 150°) et présentant des rebords formant des saillies axiales axialement en regard au travers de l'induit et définissant avec lui des entrefers radiaux. Ces armatures portent chacune au moins une portion de couronne à aimantation permanente 84 ou 85, respectivement, générant un flux magnétique se refermant axialement au travers de l'induit ; ces portions de couronne à aimantation permanente 84 ou 85 longent avantageusement les entrefers situés de part et d'autre de l'induit 81 et sont donc à aimantation axiale.

Dans l'exemple considéré ici, les flux magnétiques respectifs des deux armatures traversent l'induit dans des sens respectivement différents, et les portions de couronne 84 et 85 ont des sens d'aimantation axiale opposés.

Pour bien contrôler le flux magnétique au travers de l'induit, celui-ci est avantageusement interposé axialement entre deux portions de couronne à aimantation permanente 84 et 84A, ou 85 et 85A, pour chaque armature.

Le (ou les) bobinage(s) formé(s) sur l'induit 81 sont formés de brins en arcs de cercle 86A centrés sur l'axe X-X et raccordés par des tronçons ou brins radiaux 86B répartis en deux secteurs ou faisceaux S1 et S2 diamétralement opposés, par exemple d'amplitude angulaire d'environ 30°. Ces arcs de cercle 86A et ces tronçons radiaux 86B sont raccordés en sorte de former un bobinage 86 ayant une borne d'entrée E et une borne de sortie S.

Un tel bobinage 86 est représenté à la figure 6, étant précisé que, pour la clarté du dessin, on a exagéré l'écartement entre les tronçons 86B voisins, ou les arcs voisins 86A, et donc minimisé leur nombre. On notera que les arcs de cercle s'étendent sur près de 180° et que les brins radiaux de chacun des deux secteurs S1 et S2 sont, lorsqu'un courant est appliqué entre les bornes E et S, parcourus par des intensités de même sens. Les arcs de cercle définissent avec les tronçons radiaux des spires conformées en "banane" et emboîtées les unes dans les autres en sorte de former au moins un ensemble de spires, ici deux ensembles de spires disposées de part et d'autre d'un diamètre reliant les secteurs S1 et S2. L'un des tronçons radiaux (ici le tronçon médian du secteur S1) raccorde les deux ensembles de spires (qui constituent ainsi deux demi-bobinages).

Les sens de parcours du courant dans les secteurs sont choisis en sorte que, lorsque chacun des secteurs est pris en sandwich (sans contact pour ménager les entrefers axiaux précités) dans une armature respective, les flux d'aimantation permanente des deux armatures qui se referment au travers des secteurs induisent sur l'induit des couples de même sens.

On appréciera que le courant circulant dans les arcs de cercle n'induit aucun couple sur l'induit.

On appréciera qu'un tel principe se généralise à des moteurs à une phase et à n paires de pôles, du moment que le débattement voulu est inférieur à 2π/n, auquel cas on prévoit sur l'induit n paires de secteurs diamétralement opposés ; il peut y avoir un ou plusieurs bobinage(s) par couche de circuit imprimé, avec des spires en bananes s'étendant d'un secteur correspondant à une paire de pôles à un secteur adjacent s'étendant à une autre paire de pôles. Comme précédemment, l'amplitude de débattement est définie par la différence des amplitudes angulaires des armatures et des secteurs ou faisceaux de brins radiaux.

On notera à ce propos que l'amplitude des armatures est en fait celle des rebords de celle-ci et que ce n'est que de manière préférée que le fond des armatures a une même amplitude que ces rebords : en variante, ce fond radial pourrait être d'amplitude plus faible.

Le bobinage 86 peut être réalisé par dépôt de pistes, selon la technologie des circuits imprimés.

L'induit peut comporter plusieurs bobinages 86 ménagés en des couches de circuit imprimé axialement superposées et isolées électriquement les unes des autres, l'entrée de chaque bobinage étant toutefois connectée à la sortie du précédent, de manière à ce que ces bobinages soient en série, et les secteurs S1 et S2 des divers bobinages étant respectivement superposés axialement.

Ce moteur est commandé par une électronique schématisée en 10A à la figure 12.

On notera ici que la configuration du moteur 71 permet un faible encombrement axial et un couple important.

La bague 65, à laquelle est fixée l'induit du moteur 71, est de préférence reliée à la pièce annulaire magnétique 72 (ou à toute partie statorique) par une pluralité d'éléments élastiques 75 (par exemple quatre ou six) globalement radiaux et travaillant en compression, ici articulés, mobiles transversalement à l'axe entre deux configurations extrêmes dans lesquelles les pinces sont en configuration, soit de verrouillage, soit de déverrouillage ; ces éléments élastiques ont une configuration intermédiaire (d'équilibre instable) dans laquelle ils sont orientés radialement, grâce à quoi ce dispositif de verrouillage est rendu bistable de façon passive. On appréciera (voir ci-dessus) que ces éléments élastiques ont ici une double fonction puisqu'ils génèrent l'effort de serrage et assurent ce positionnement bistable.

Les éléments élastiques assurent ainsi :
- un verrouillage sûr (non déverrouillage sous vibrations),
- un déverrouillage sûr lui aussi,
- une réversibilité de la fonction verrouillage/déverrouillage.

Cette solution permet à la fois d'éviter le recours à une libération pyrotechnique, d'autoriser lors des essais au sol du système complet plusieurs verrouillages et déverrouillages et donc de tester le système de verrouillage lui-même. Ce système est donc prévu pour fonctionner plusieurs fois au sol, mais a priori une seule fois en vol pour le déverrouillage.

Du point de vue alimentation (voir la figure 12) la seule source d'énergie requise est la tension primaire du bus d'alimentation. En entrée, l'électronique d'alimentation comprend (bloc 16 déjà cité) les protections nécessaires afin de conserver l'intégrité de l'alimentation ainsi que les filtrages utiles.

A la suite, un (ou plusieurs) convertisseur(s) 15 assure(nt) la réalisation des tensions nécessaires à toute l'électronique du système de balayage ; il réalise l'isolement galvanique.

La référence 17 de la figure 10 représente le bloc d'interface et de protection de l'ensemble vis à vis du calculateur de bord (et réciproquement) auquel il est relié par un bus de commande et un bus de surveillance.

Il est possible de prévoir, en cas de besoin, un système de compensation dynamique visant à supprimer, ou du moins à diminuer fortement le couple de réaction transmis au satellite. Le principe de ce système résiderait dans la mise en rotation d'un volant d'inertie en sens inverse de celui du miroir. Diverses solutions sont possibles mais la seule qui apparait réalisable de façon fiable (quoi que pénalisante du point de vue masse) sans dégrader le niveau de précision angulaire sur le balayage consiste à installer dans l'axe du système principal un autre palier magnétique, entraîné en rotation par un moteur strictement identique à celui du système de balayage et couplé à un volant d'inertie. Aucune liaison mécanique (engrenages) ne relie alors le système principal à ce nouvel ensemble palier-moteur-volant d'inertie ; simplement les deux moteurs (balayage et compensation dynamique) sont branchés ensemble (en série pour avoir le même couple) en opposition : la commande du balayage actionne ainsi à la fois le système portant le miroir et le contre-volant d'inertie. Le couple résultant transmis au satellite est donc du niveau de la différence de couple entre les deux moteurs, soit du niveau de la différence entre les inductions des aimants du stator de chacun des deux moteurs.

En variante, par exemple, on peut être amené à supprimer le résolveur, par exemple dans le cas où le rotor du moteur serait soumis à un rappel élastique vers une configuration neutre donnée par rapport au stator.

## Revendications

1. Moteur-couple (8) comportant un inducteur (31-32) lié à un arbre mobile en rotation à l'intérieur d'un débattement angulaire donné autour d'un axe donné (X-X) par rapport à une partie statorique comportant un induit, dans lequel :
- l'inducteur comporte un barreau central (31) allongé selon ledit axe comportant deux portions d'un même cylindre (33A, 33B) diamétralement opposées et d'axes confondus avec l'axe donné, d'amplitudes angulaires sensiblement égales inférieures à 180°, et séparées par deux méplats longitudinaux (34A, 34B) globalement parallèles, ainsi qu'un barreau central à aimantation permanente (35) disposé suivant l'axe donné et de sens d'aimantation orienté sensiblement parallèlement aux méplats, et
- l'induit (30) comporte au moins un bobinage (36) ayant une entrée (E) et une sortie (S) et comportant des brins longitudinaux parallèles disjoints (36A) raccordés par des brins (36B) disposés transversalement à l'axe donné, ces brins longitudinaux étant répartis en deux faisceaux (F1, F2) diamétralement opposés, ce moteur étant caractérisé en ce que l'inducteur comporte en outre une portion tubulaire ferromagnétique (32) s'étendant circonférentiellement tout autour de ce barreau central radialement à distance de celui-ci, et en ce que l'induit est un élément tubulaire interposé radialement entre le barreau central et la portion tubulaire ferromagnétique et tous les brins d'un faisceau étant, lorsqu'un courant est appliqué entre l'entrée et la sortie du bobinage, parcourus par des courants de même sens, chaque faisceau étant en regard de l'une, respective, des portions de cylindre, et ledit débattement angulaire donné étant inférieur à la différence entre les amplitudes angulaires des portions de cylindre et des faisceaux.

2. Moteur-couple selon la revendication 1, caractérisé en ce que le barreau central à aimantation permanente (35) s'étend d'un méplat (34A) à l'autre (34B).

3. Moteur-couple selon la revendication 1 ou la revendication 2, caractérisé en ce que le barreau central (31) s'étend axialement sur une distance inférieure à la longueur des brins longitudinaux et les brins transversaux sont disposés axialement à l'écart de part et d'autre de ce barreau central.

4. Moteur-couple selon l'une quelconque des revendications 1 à 3, caractérisé en ce que les méplats (34A, 34B) sont plans et parallèles.

5. Moteur-couple selon l'une quelconque des revendications 1 à 4, caractérisé en ce que l'amplitude angulaire de chaque portion de cylindre (33A, 33B) est comprise entre 90° et 170°.

6. Moteur-couple selon l'une quelconque des revendications 1 à 4, caractérisé en ce que l'amplitude angulaire de chaque faisceau (F1, F2) est inférieure à 30°.

7. Moteur-couple selon la revendication 4, caractérisé en ce que l'amplitude angulaire de chaque portion de cylindre est de 150° environ, l'amplitude angulaire de chaque faisceau est d'environ 30°, et l'amplitude de débattement est d'environ 120°.

8. Moteur-couple selon l'une quelconque des revendications 1 à 7, caractérisé en ce que l'induit tubulaire est formé de plusieurs bobinages montés en série ménagés en couches radialement superposées mais électriquement isolées les unes des autres, l'entrée de chaque bobinage étant toutefois connectée à la sortie du bobinage précédent, et les faisceaux des bobinages, dont les brins longitudinaux sont parcourus à tout instant par des courants de même sens axial, étant superposés radialement.

9. Moteur-couple selon la revendication 8, caractérisé en ce que l'induit tubulaire est formé de 2 à 10 couches de bobinages formés de pistes de circuits imprimés.

10. Moteur-couple selon l'une quelconque des revendications 1 à 8, caractérisé en ce que les faisceaux (F1, F2) de l'induit tubulaire sont formés de fils conducteurs voisins répartis dans l'épaisseur de cet induit.

11. Dispositif de commande en débattement angulaire d'un équipage mobile (4), comportant un stator, un arbre (5) lié à cet équipage mobile et s'étendant selon un axe donné (X-X) et comportant un moteur (8) selon l'une quelconque des revendications 1 à 10, cet arbre étant monté dans au moins un palier magnétique (7, 7').

12. Dispositif de commande selon la revendication 11, caractérisé en ce que chaque palier magnétique est à deux axes transversaux asservis.

13. Dispositif de commande selon la revendication 12, caractérisé en ce que chaque palier magnétique (7, 7') comporte une couronne polaire ferromagnétique (20) portée par l'arbre et, autour de cette couronne, portées par le stator, une couronne à aimantation permanente axiale (23), deux paires de noyaux axiaux (26) entourés de bobines, et deux plaques polaires (24, 25 enserrant cette couronne à aimantation permanente et ces paires de noyaux.

14. Dispositif de commande selon l'une quelconque des revendications 11 à 13, caractérisé en ce qu'il y a deux paliers magnétiques ayant chacun deux axes transversaux asservis.

15. Dispositif de commande selon la revendication 13, caractérisé en ce que la portion tubulaire ferromagnétique (32) du moteur comporte deux couronnes polaires ferromagnétiques (20) faisant partie de deux paliers magnétiques.

16. Dispositif de commande selon la revendication 14 ou la revendication 15, caractérisé en ce qu'il comporte un dispositif de commande en basculement comportant au moins l'une des paires de bobines de l'un des paliers, et un bloc de commande (11A) adapté à faire varier la consigne de positionnement de l'arbre transversalement à l'axe de rotation (X-X) pour au moins cette paire de bobines.

17. Dispositif de commande selon l'une quelconque des revendications 11 à 16, caractérisé en ce qu'il comporte un dispositif de verrouillage (10) adapté à maintenir radialement l'arbre dans une configuration donnée.

18. Dispositif de commande selon la revendication 17, caractérisé en ce qu'il comporte deux paliers magnétiques et ce dispositif de verrouillage (10) est disposé axialement entre ces deux paliers magnétiques.

19. Dispositif de commande selon la revendication 17 ou la revendication 18, caractérisé en ce que ce dispositif de verrouillage comporte une pluralité de pinces (60) munies de patins de serrage (61) articulées sur une partie statorique autour de pions axiaux (63) situés à distance de l'axe, mobiles sous l'action d'une pièce de manoeuvre (65) entre une configuration de déverrouillage dans laquelle les patins sont à une distance maximale de l'axe et une configuration de verrouillage dans laquelle les patins sont à une distance minimale de l'axe propre à induire un serrage radial de l'arbre.

20. Dispositif de commande selon la revendication 19, caractérisé en ce que les patins de serrage sont en regard radialement de la portion tubulaire ferromagnétique du moteur (8).

21. Dispositif de commande selon la revendication 19 ou la revendication 20, caractérisé en ce que l'arbre comporte des butées axiales adaptées à venir axialement en regard des patins de serrage dans la configuration de verrouillage, grâce à quoi cet arbre est maintenu axialement dans ladite configuration de verrouillage.

22. Dispositif de commande selon l'une quelconque des revendications 19 à 21, caractérisé en ce que la pièce de manoeuvre (65) est une bague annulaire centrée sur l'axe ayant un débattement angulaire donné, comportant autant de tétons axiaux (68) qu'il y a de pinces, chaque pince comportant une lumière circonférentielle (67) traversée par l'un des tétons (68), les bords radialement interne et externe (69, 70) de cette lumière formant des rampes pour les tétons, cette lumière comportant une première extrémité circonférentielle (69) située à une distance minimale de l'axe de rotation et une seconde extrémité circonférentielle (70) située à une distance maximale de l'axe de rotation, grâce à quoi, lorsque les tétons de la bague sont dans les premières extrémités circonférentielles des lumières, les pinces sont dans leurs configurations de déverrouillage et lorsque les tétons de la bague sont dans les secondes extrémités circonférentielles des lumières, les pinces sont dans leurs configurations de verrouillage.

23. Dispositif de commande selon la revendication 22, caractérisé en ce que ces tétons (68) sont chacun munis de roulements adaptés à rouler sur les bords radialement externes ou internes des lumières circonférentielles.

24. Dispositif de commande selon la revendication 22 ou la revendication 23, caractérisé en ce que la bague est commandée en débattement angulaire par un second moteur (71) comportant un induit solidaire de la bague et un inducteur lié à la partie statorique (2) du dispositif de commande en débattement angulaire, cet induit ayant globalement la forme d'un disque plat et l'inducteur étant formé d'au moins une paire d'armatures magnétiques circonférentiellement disjointes coiffant sans contact la périphérie radialement externe de ce disque sur des secteurs angulaires disjoints et présentant chacune deux rebords formant des saillies axiales axialement en regard au travers du disque, au moins une portion de couronne à aimantation permanente coplanaire à l'axe étant ménagée dans chaque armature en sorte de générer un flux magnétique se refermant axialement entre les rebords au travers de l'induit, cet induit comportant au moins un bobinage plan, avec une entrée et une sortie, formé de brins en arc de cercle concentriques et centrés sur l'axe et de brins radiaux raccordant les brins en arc de cercle en sorte de former au moins un ensemble de spires en forme de banane emboîtées les unes dans les autres mais raccordées en série, les brins radiaux de chaque bobinage étant regroupés en au moins une paire de faisceaux formés de brins adjacents mais disjoints tels que, lorsqu'un courant est appliqué entre l'entrée et la sortie du bobinage, tous les brins radiaux d'un même faisceau soient parcourus par des courants de même sens radial, chacun des faisceaux étant disposé axialement entre les rebords d'une armature respective, le sens axial du flux traversant l'induit entre les rebords de chaque armature étant choisi en sorte que, lorsqu'un courant est appliqué entre l'entrée et la sortie du bobinage, l'interaction entre les courants circulant dans les brins des faisceaux avec les flux magnétiques axiaux génère sur l'induit des couples de même sens, l'amplitude angulaire du débattement étant définie par la différence entre les amplitudes angulaires des paires de rebords et des faisceaux de brins radiaux.

25. Dispositif de commande selon l'une quelconque des revendications 22 à 24, caractérisé en ce que les patins de serrage sont sollicités radialement vers l'axe par des éléments élastiques agissant sur la bague.

26. Dispositif de commande selon l'une quelconque des revendications 22 à 25, caractérisé en ce que la bague de manoeuvre est reliée à une portion statorique par une pluralité d'éléments élastiques (75) globalement radiaux, travaillant en compression, mobiles dans un plan transversal à l'axe de part et d'autre d'une configuration instable dans laquelle ils sont orientés radialement, entre deux configurations extrêmes stables pour lesquelles les pinces sont en leurs configurations de verrouillage ou de déverrouillages, respectivement.

## Patentansprüche

1. Drehmomentmotor (8), welcher einen Induktor (31-32) aufweist, der mit einer Welle verbunden ist, die innerhalb eines um eine vorgegebene Achse (X-X) vorgegebenen winkligen Ausschlags bezüglich eines einen Anker enthaltenden Statorteils drehbeweglich ist, wobei:
- der Induktor einen sich entlang der Achse erstreckenden zentralen Stab (31), welcher zwei Abschnitte eines selben Zylinders (33A, 33B) aufweist, die einander diametral gegenüberliegen und deren Achsen mit der vorgegebenen Achse zusammenfallen, deren Winkelamplituden im wesentlichen gleich und kleiner als 180° sind und die durch zwei longitudinale, in ihrer Gesamtheit parallele Abflachungen (34A, 34B) getrennt sind, sowie einen zentralen Permanentmagnetstab (35) aufweist, der entlang der vorgegebenen Achse angeordnet ist und eine Magnetisierungsrichtung hat, die im wesentlichen parallel zu den Abflachungen gerichtet ist, und
- der Anker (30) zumindest eine Wicklung (36) aufweist, die einen Eingang (E) und einen Ausgang (S) hat und longitudinale, parallele, getrennte Stränge (36A) aufweist, die durch transversal zur vorgegebenen Achse angeordnete Stränge (36B) verbunden sind, wobei diese longitudinalen Stränge in zwei einander diametral gegenüberliegende Bündel (F1, F2) aufgeteilt sind,
wobei dieser Motor dadurch gekennzeichnet ist, daß der Induktor außerdem einen ferromagnetischen röhrenförmigen Abschnitt (32) aufweist, der sich umfangsseitig ganz um diesen zentralen Stab in einem radialen Abstand zu ihm erstreckt, und dadurch, daß der Anker ein röhrenförmiges Element ist, das radial zwischen den zentralen Stab und den ferromagnetischen röhrenförmigen Abschnitt gesetzt ist, wobei alle Stränge eines Bündels, wenn ein Strom zwischen dem Eingang und dem Ausgang der Wicklung angelegt wird, von Strömen der gleichen Richtung durchlaufen werden, wobei jedes Bündel jeweils einem der Zylinderabschnitte gegenüberliegt und der vorgegebene winklige Ausschlag kleiner ist als die Differenz zwischen den Winkelamplituden der Zylinderabschnitte und der Bündel.

2. Drehmomentmotor nach Anspruch 1, dadurch gekennzeichnet, daß der zentrale Permanentmagnetstab (35) sich von einer Abflachung (34A) zur anderen (34B) erstreckt.

3. Drehmomentmotor nach Anspruch 1 oder Anspruch 2, dadurch gekennzeichnet, daß der zentrale Stab (31) sich axial auf einem Abstand erstreckt, der kleiner als die Länge der longitudinalen Stränge ist, und die transversalen Stränge axial in einem Abstand beiderseits dieses zentralen Stabs angeordnet sind.

4. Drehmomentmotor nach einem der Ansprüche 1 bis 3, dadurch gekennzeichnet, daß die Abflachungen (34A, 34B) eben und parallel sind.

5. Drehmomentmotor nach einem der Ansprüche 1 bis 4, dadurch gekennzeichnet, daß die Winkelamplitude jedes Zylinderabschnitts (33A, 33B) zwischen 90° und 170° liegt.

6. Drehmomentmotor nach einem der Ansprüche 1 bis 4, dadurch gekennzeichnet, daß die Winkelamplitude jedes Bündels (F1, F2) kleiner als 30° ist.

7. Drehmomentmotor nach Anspruch 4, dadurch gekennzeichnet, daß die Winkelamplitude jedes Zylinderabschnitts etwa 150°, die Winkelamplitude jedes Bündels etwa 30° und die Ausschlagsamplitude etwa 120° beträgt.

8. Drehmomentmotor nach einem der Ansprüche 1 bis 7, dadurch gekennzeichnet, daß der röhrenförmige Anker von mehreren in Serie angebrachten Wicklungen gebildet wird, die in radial übereinander geschichteten, jedoch gegeneinander elektrisch isolierten Lagen angeordnet sind, wobei der Eingang jeder Wicklung in jedem Fall mit dem Ausgang der vorhergehenden Wicklung verbunden ist und die Wicklungsbündel, deren longitudinale Stränge zu jedem Zeitpunkt von Strömen der gleichen axialen Richtung durchlaufen werden, radial übereinander geschichtet sind.

9. Drehmomentmotor nach Anspruch 8, dadurch gekennzeichnet, daß der röhrenförmige Anker aus zwei bis zehn Wicklungslagen gebildet ist, die aus Bahnen gedruckter Schaltungen gebildet sind.

10. Drehmomentmotor nach einem der Ansprüche 1 bis 8, dadurch gekennzeichnet, daß die Bündel (F1, F2) des röhrenförmigen Ankers aus benachbarten Leiterbahnen gebildet sind, die in der Dicke dieses Ankers verteilt sind.

11. Antriebsvorrichtung für den winkligen Ausschlag eines beweglichen Organs (4), welche einen Stator, eine Welle (5), die mit diesem beweglichen Organ verbunden ist und sich entlang einer vorgegebenen Achse (X-X) erstreckt, und einen Motor (8) nach einem der Ansprüche 1 bis 10 aufweist, wobei diese Welle in zumindest einem Magnetlager (7, 7') gelagert ist.

12. Antriebsvorrichtung nach Anspruch 11, dadurch gekennzeichnet, daß jedes Magnetlager zwei transversale Regelachsen hat.

13. Antriebsvorrichtung nach Anspruch 12, dadurch gekennzeichnet, daß jedes Magnetlager (7, 7') eine von der Welle getragene ferromagnetische polare Einfassung (20) und, um diese Einfassung, vom Stator getragen, eine permanent axial magnetisierte Einfassung (23), zwei Paar axiale Kerne (26), die von Spulen umgeben sind, und zwei polare Platten (24, 25) aufweist, die diese permanent magnetisierte Einfassung und diese Kernpaare umschließen.

14. Antriebsvorrichtung nach einem der Ansprüche 11 bis 13, dadurch gekennzeichnet, daß es zwei Magnetlager gibt, von denen jedes zwei transversale Regelachsen hat.

15. Antriebsvorrichtung nach Anspruch 13, dadurch gekennzeichnet, daß der ferromagnetische röhrenförmige Abschnitt (32) des Motors zwei polare ferromagnetische Einfassungen (20) aufweist, die Teil zweier Magnetlager sind.

16. Antriebsvorrichtung nach Anspruch 14 oder Anspruch 15, dadurch gekennzeichnet, daß sie eine Antriebsvorrichtung zum Kippen, welche zumindest eines der Spulenpaare eines der Lager aufweist, und einen Antriebsblock (11A) aufweist, der dafür ausgelegt ist, die Positionierungseinstellung der Welle transversal zur Rotationsachse (X-X) für zumindest dieses Spulenpaar variieren zu lassen.

17. Antriebsvorrichtung nach einem der Ansprüche 11 bis 16, dadurch gekennzeichnet, daß sie eine Verriegelungsvorrichtung (10) aufweist, die dafür ausgelegt ist, die Welle radial in einer vorgegebenen Konfiguration zu halten.

18. Antriebsvorrichtung nach Anspruch 17, dadurch gekennzeichnet, daß sie zwei Magnetlager aufweist und diese Verriegelungsvorrichtung (10) axial zwischen diesen beiden Magnetlagern angeordnet ist.

19. Antriebsvorrichtung nach Anspruch 17 oder Anspruch 18, dadurch gekennzeichnet, daß diese Verriegelungsvorrichtung eine Vielzahl von Klemmen (60) aufweist, die mit Klemmschuhen (61) versehen sind, auf einem Statorteil um axiale Metallstücke (63), welche in einem Abstand zur Achse gelegen sind, gelenkig angebracht sind, und unter der Wirkung eines Betätigungsteils (65) zwischen einer Entriegelungskonfiguration, in der die Schuhe sich in einem maximalen Abstand von der Achse befinden, und einer Verriegelungskonfiguration, in der die Schuhe sich in einem minimalen Abstand von der Achse befinden und die geeignet ist, bei der Welle eine radiale Klemmung zu bewirken, beweglich sind.

20. Antriebsvorrichtung nach Anspruch 19, dadurch gekennzeichnet, daß die Klemmschuhe dem röhrenförmigen ferromagnetischen Abschnitt des Motors (8) radial gegenüberstehen.

21. Antriebsvorrichtung nach Anspruch 19 oder Anspruch 20, dadurch gekennzeichnet, daß die Welle axiale Anschläge aufweist, die dafür ausgelegt sind, in der Verriegelungskonfiguration axial gegenüber den Klemmschuhen zum Stehen zu kommen, wodurch diese Welle axial in der Verriegelungskonfiguration gehalten wird.

22. Antriebsvorrichtung nach einem der Ansprüche 19 bis 21, dadurch gekennzeichnet, daß das Betätigungsteil (65) ein ringförmiger Reif ist, der auf die Achse zentriert ist, einen vorgegebenen winkligen Ausschlag hat, soviele axiale Ansätze (68) aufweist, wie es Klemmen gibt, wobei jede Klemme eine umfangsseitige Öffnung (67) aufweist, die durch einen der Ansätze (68) gekreuzt wird, wobei die radial inneren und äußeren Ränder (69, 70) dieser Öffnung Rampen für die Ansätze bilden, diese Öffnung ein erstes umfangsseitiges Ende (69), das in einem minimalen Abstand von der Rotationsachse gelegen ist, und ein zweites umfangsseitiges Ende (70) aufweist, das in einem maximalen Abstand von der Rotationsachse gelegen ist, wodurch, wenn die Ansätze des Reifs sich in den ersten umfangsseitigen Enden der Öffnungen befinden, sich die Klemmen in ihren Entriegelungskonfigurationen befinden, und, wenn die Ansätze des Reifs sich in den zweiten umfangsseitigen Enden der Öffnungen befinden, sich die Klemmen in ihren Verriegelungskonfigurationen befinden.

23. Antriebsvorrichtung nach Anspruch 22, dadurch gekennzeichnet, daß jeder dieser Ansätze (68) mit Rollen versehen ist, die dafür ausgelegt sind, auf den radial äußeren oder inneren Rändern der umfangsseitigen Öffnungen zu rollen.

24. Antriebsvorrichtung nach Anspruch 22 oder Anspruch 23, dadurch gekennzeichnet, daß der Reif beim winkligen Ausschlag durch einen zweiten Motor (71) angetrieben wird, welcher einen mit dem Reif einstückigen Anker und einen mit dem Statorteil (2) der Antriebsvorrichtung für den winkligen Ausschlag verbundenen Induktor aufweist, wobei dieser Anker im ganzen die Form einer platten Scheibe aufweist und der Induktor aus zumindest einem Paar Magnetplatten gebildet ist, die umfangsseitig getrennt sind, ohne Kontakt die radial äußere Peripherie dieser Scheibe auf getrennten winkligen Sektoren bedecken und von denen jede zwei Leisten aufweist, die axiale Auskragungen bilden, welche einander durch die Scheibe gegenüberliegen, wobei zumindest ein koplanar zur Achse permanent magnetisierter Einfassungsabschnitt in jeder Platte so angeordnet ist, daß er einen Magnetfluß erzeugt, der sich axial zwischen den Leisten durch den Anker schließt, wobei dieser Anker zumindest eine ebene Wicklung mit einem Eingang und einem Ausgang aufweist, die aus konzentrischen, kreisbogenförmigen und auf die Achse zentrierten Strängen und aus radialen Strängen gebildet ist, die die kreisbogenförmigen Stränge so verbinden, daß sie zumindest einen bananenförmigen Satz von Windungen bilden, die ineinander eingesetzt, jedoch in Serie geschaltet sind, wobei die radialen Stränge jeder Wicklung in zumindest ein Paar Stränge zusammengefaßt sind, die aus angrenzenden, doch getrennten Strängen solcher Art gebildet werden, daß, wenn ein Strom zwischen dem Eingang und dem Ausgang der Wicklung angelegt wird, alle radialen Stränge eines selben Bündels von Strömen der gleichen radialen Richtung durchlaufen werden, wobei jedes der Bündel axial zwischen die Leisten einer jeweiligen Platte gesetzt ist, wobei die axiale Richtung des Flusses, der den Anker zwischen den Leisten jeder Platte kreuzt, so gewählt ist, daß, wenn ein Strom zwischen dem Eingang und dem Ausgang der Wicklung angelegt wird, die Wechselwirkung zwischen den in den Strängen der Bündel kreisenden Strömen und den axialen magnetischen Flüssen auf dem Anker Drehmomente der gleichen Richtung erzeugt, wobei die Winkelamplitude des Ausschlags durch die Differenz zwischen den Winkelamplituden der Leistenpaare und der radialen Strangbündel definiert wird.

25. Antriebsvorrichtung nach einem der Ansprüche 22 bis 24, dadurch gekennzeichnet, daß die Klemmschuhe durch elastische Elemente, die auf den Reif wirken, radial gegen die Achse belastet werden.

26. Antriebsvorrichtung nach einem der Ansprüche 22 bis 25, dadurch gekennzeichnet, daß der Betätigungsreif mit einem Statorabschnitt durch eine Vielzahl von in ihrer Gesamtheit radialen Elementen (75) verbunden ist, welche bei Kompression tätig werden und welche in einer Ebene transversal zur Achse beiderseits einer instabilen Konfiguration, in der sie radial orientiert sind, zwischen zwei extrem stabilen Konfigurationen beweglich sind, für die die Klemmen sich jeweils in ihren Verriegelungs- oder Entriegelungskonfigurationen befinden.

## Claims

1. Torque motor (8) including a field assembly (31-32) coupled to a shaft rotating within a given angular displacement about a given axis (X-X) relative to a stator part including an armature, wherein:
- the field assembly includes an elongate central bar (31) along said axis including two diametrally opposed portions (33A, 33B) of the same cylinder coaxial with the given axis, subtending substantially equal angles less than 180° and separated by two globally parallel longitudinal flats (34A, 34B), and a permanently magnetised central bar (35) disposed along the given axis with its magnetisation direction substantially parallel to the flats, and
- the armature (30) includes at least one coil (36) having an input (E) and an output (S) and including separate parallel longitudinal strands (36A) connected by strands (36B) disposed transversely to the given axis, these longitudinal strands being divided into two diametrally opposed groups (F1, F2), this motor being characterised in that the field assembly includes a ferromagnetic tubular portion (32) extending circumferentially all around this central bar at a radial distance therefrom, and in that the armature is a tubular member disposed radially between the central bar and the ferromagnetic tubular portion, and all the strands of a group carrying current in the same direction when current is applied between the input and the output of the coil, each group facing a respective cylinder portion, and said given angular displacement being less than the difference between the angles subtended by the cylinder portions and by the groups.

2. Torque motor according to claim 1 characterised in that the permanently magnetised central bar (35) extends from one flat (34A) to the other (34B).

3. Torque motor according to claim 1 or claim 2 characterised in that the central bar (31) extends axially over a distance less than the length of the longitudinal strands and the transverse strands are axially offset to either side of this central bar.

4. Torque motor according to any one of claims 1 to 3 characterised in that the flats (34A, 34B) are plane and parallel.

5. Torque motor according to any one of claims 1 to 4 characterised in that the angle subtended by each cylinder portion (33A, 33B) is between 90° and 170°.

6. Torque motor according to any one of claims 1 to 4 characterised in that the angle subtended by each group (F1, F2) is less than 30°.

7. Torque motor according to claim 4 characterised in that the angle subtended by each cylinder portion is approximately 150°, the angle subtended by each group is approximately 30° and the amplitude of angular displacement is approximately 120°.

8. Torque motor according to any one of claims 1 to 7 characterised in that the tubular armature is in the form of a plurality of coils in series formed of radially stacked layers electrically insulated from each other, the input of each coil being connected to the output of the preceding coil, and the groups of coils, the longitudinal strands of which carry currents in the same axial direction at any time, are stacked radially.

9. Torque motor according to claim 8 characterised in that the tubular armature is formed of two to ten layers of coils formed by printed circuit tracks.

10. Torque motor according to any one of claims 1 to 8 characterised in that the groups (F1, F2) of the tubular armature are formed of adjoining conductive wires distributed within the thickness of this armature.

11. Device for controlling angular displacement of a mobile assembly (4) including a stator, a shaft (5) coupled to said mobile assembly and extending along a given axis (X-X) and including a motor (8) according to any one of claims 1 to 10, this shaft being mounted in at least one magnetic bearing (7, 7').

12. Control device according to claim 11 characterised in that each magnetic bearing has two transverse control axes.

13. Control device according to claim 12 characterised in that each magnetic bearing (7, 7') includes a ferromagnetic pole ring (20) carried by the shaft and, around this ring, carried by the stator, a permanently axially magnetised ring (23), two pairs of axial cores (26) carrying coils and two pole plates (24, 25) around this permanently magnetised ring and these pairs of cores.

14. Control device according to any one of claims 11 to 13 characterised in that there are two magnetic bearings each having two transverse control axes.

15. Control device according to claim 13 characterised in that the ferromagnetic tubular portion (32) of the motor includes two ferromagnetic pole rings (20) which are part of two magnetic bearings.

16. Control device according to claim 14 or claim 15 characterised in that it includes a tilt control device including at least one of the pairs of coils of one of the bearings and a control unit (llA) adapted to vary the set point for the position of the shaft transversely to the rotation axis (X-X) for at least this pair of coils.

17. Control device according to any one of claims 11 to 16 characterised in that it includes a locking device (10) adapted to hold the shaft radially in a given configuration.

18. Control device according to claim 17 characterised in that it includes two magnetic bearings and this locking device (10) is disposed axially between the two magnetic bearings.

19. Control device according to claim 17 or claim 18 characterised in that this locking device includes a plurality of clamps (60) provided with clamp shoes (61) articulated to a stator part around axial pins (63) disposed at a distance from the axis and movable by a manoeuvring member (65) between an unlocked configuration in which the shoes are at a maximal distance from the axis and a locked configuration in which the shoes are at a minimal distance from the axis adapted to induce radial clamping of the shaft.

20. Control device according to claim 19 characterised in that the clamping shoes are radially facing the ferromagnetic tubular portion of the motor (8).

21. Control device according to claim 19 or claim 20 characterised in that the shaft includes axial abutments adapted to face the clamping shoes axially in the locked configuration whereby this shaft is held axially in said locked configuration.

22. Control device according to any one of claims 19 to 21 characterised in that the manoeuvring member (65) is an annular ring concentric with the axis and having a given angular displacement, including as many axial pins (68) as there are clamps, each clamp including a circumferential slot (67) through which one of the pins (68) passes, the radially inner and outer edges (69, 70) of this slot forming ramps for the pins, this slot having a first circumferential end (69) at a minimal distance from the rotation axis and a second circumferential end (70) at a maximal distance from the rotation axis, whereby when the pins on the ring are at the first circumferential ends of the slots the clamps are in their unlocked configuration and when the pins on the ring are at the second circumferential ends of the slots the clamps are in their locked configuration.

23. Control device according to claim 22 characterised in that the pins (68) are each provided with bearings adapted to roll on the radially external or internal edges of the circumferential slots.

24. Control device according to claim 22 or claim 23 characterised in that angular displacement of the ring is controlled by a second motor (71) including an armature fastened to the ring and a field assembly coupled to the stator part (2) of the angular displacement control device, this armature having globally the shape of a flat disk and the field assembly being formed by at least one pair of circumferentially separated magnetic armatures capping without contacting the radially external periphery of this disk over separate angular sectors and each having two flanges forming axial projections facing each other through the disk, at least one permanently magnetised ring portion coplanar with the axis being formed in each armature to generate a magnetic flux closing axially between the flanges through the armature, this armature including at least one plane coil with an input and an output formed of circular arc strands concentric with the axis and radial strands connecting the circular arc strands to form at least one set of banana-shaped turns nested in each other but connected in series, the radial strands of each coil being grouped into at least one pair of groups formed of adjacent but separate strands so that, when a current is applied between the input and the output of the coil, all of the radial strands of the same group carry currents in the same radial direction, each group being disposed axially between the flanges of a respective armature, the axial direction of the flux through the armature between the flanges of each armature being chosen such that, when a current is applied between the input and the output of the coil, interaction between the currents flowing in the strands of the groups and the axial magnetic fluxes generates torques on the armature in the same direction, the amplitude of the angular displacement being defined by the difference between the angles subtended by the pairs of flanges and by the groups of radial strands.

25. Control device according to any one of claims 22 to 24 characterised in that the clamping shoes are urged radially towards the axis by spring members operating on the ring.

26. Control device according to any one of claims 22 to 25 characterised in that the manoeuvring ring is joined to a stator portion by a plurality of globally radial elastic members (75) operating in compression and mobile in a plane transverse to the axis to either side of an unstable configuration in which they are radially oriented between two stable extreme configurations for which the clamps are respectively in their locked and unlocked configurations.
